# EUROPEAN PATENT SPECIFICATION

(11) **EP 4 467 674 B1**
(45) Date of publication and mention of the grant of the patent: **17.09.2025**
(21) Application number: 24151133.6
(22) Date of filing: 10.01.2024
(51) Int. Cl.: C22C 1/02, C22C 19/05, C22F 1/10

(54) **DISC-SHAFT INTEGRATED TURBINE DISC, AND MANUFACTURING METHOD THEREOF**
IN EINE SCHEIBENWELLE INTEGRIERTE TURBINENSCHEIBE UND HERSTELLUNGSVERFAHREN DAFÜR
DISQUE DE TURBINE INTÉGRÉ D'ARBRE À DISQUE ET SON PROCÉDÉ DE FABRICATION

(30) Priority: 28.07.2023 CN 202310936756
(43) Date of publication of application: 27.11.2024
(73) Proprietor: Gaona Aero Material Co. Ltd, Beijing 100081 (CN); Sichuan Cisri-Gaona Forging Co. Ltd, Deyang, Sichuan 618099 (CN)
(72) Inventor: QU, Jinglong, Beijing, 100081 (CN); SUN, Shaobin, Beijing, 100081 (CN); HOU, Weixue, Beijing, 100081 (CN); YANG, Chengbin, Beijing, 100081 (CN); RONG, Yi, Beijing, 100081 (CN); YANG, Shanjie, Beijing, 100081 (CN); TANG, Chao, Beijing, 100081 (CN); WANG, Minqing, Beijing, 100081 (CN); DU, Jinhui, Beijing, 100081 (CN); ZHANG, Beijiang, Beijing, 100081 (CN); FU, Rui, Beijing, 100081 (CN); XIE, Xingfei, Beijing, 100081 (CN); LV, Shaomin, Beijing, 100081 (CN); ZHANG, Xiaomeng, Beijing, 100081 (CN); LUO, Zhiqiang, Beijing, 100081 (CN); WANG, Guanglei, Beijing, 100081 (CN)
(74) Representative: Forresters IP LLP

(56) References cited:
- EP-A1- 3 109 331
- CN-A- 103 341 586
- CN-A- 108 315 599
- CN-A- 114 645 162

## Description

### TECHNICAL FIELD

The present invention relates to the technical field of turbine discs, and in particular to a disc-shaft integrated turbine disc, and a manufacturing method thereof.

### BACKGROUND

Turbine discs are key rotating components for aerospace devices. Turbine discs for aerospace engines have a smaller size and a higher rotational speed than turbine disc forgings for ground gas turbines, and thus materials of the turbine discs for aerospace engines need to have high durability and fatigue performance, which are closely related to uniformity of grain sizes. Therefore, the turbine discs for aerospace engines have high requirements for homogeneous fine grains in materials. Advanced turbine disc forgings for aerospace engines often have a disc and a shaft integrated, and the disc and the shaft can be allowed to undergo coordinated deformation to obtain homogeneous fine grains, which is very important to improvement of a service life of a turbine disc forging for an aerospace engine. The existing disc-shaft integrated turbine disc forgings often have mixed crystals, and thus high-temperature durability and low-cycle fatigue (LCF) performance of the existing disc-shaft integrated turbine disc forgings cannot meet the requirements of high-temperature applications.

CN103341586A discloses a method for achieving forming of GH4738 nickel-base superalloy turbine discs comprising the following steps: adopting a compound insulation method with a sheath and insulation cotton, carrying out double-firing-number heating, upsetting and die forging, and carrying out solidifying solution and double aging processing at the sub solid solution temperature.

### SUMMARY

In view of the above-mentioned situation, the present invention is intended to provide a disc-shaft integrated turbine disc, and a manufacturing method thereof. The present invention is intended to solve the problem that the existing disc-shaft integrated turbine discs have mixed crystals and thus are difficult to meet the comprehensive requirements of high-temperature durability and LCF performance.

The objective of the present invention is mainly allowed by the following technical solutions:

In a first aspect, the present invention provides a disc-shaft integrated turbine disc, in accordance with claim 1.

In a second aspect, the present invention provides a manufacturing method of the disc-shaft integrated turbine disc, in accordance with claim 3.

Further, in the step 1, the vacuum induction melting (VIM) includes:
S1.2.1: raw material loading: loading a carbon powder, a cobalt block, and a molybdenum strip into a vacuum induction furnace in batches, and after furnace materials are completely loaded into the vacuum induction furnace, vacuuming and energizing the vacuum induction furnace;
S1.2.2: melting and refining: baking at a low power to allow vacuuming, and allowing a gradient increase of a power to 1,000 KW to 1,500 KW; after the first group of raw materials are fully melted, adding a remaining nickel plate, a remaining carbon powder, and a remaining cobalt block; and after furnace materials are completely melted, electromagnetically stirring a resulting alloy liquid; and
S1.2.3: discharging and casting: reducing the power, and conducting heat preservation; adding an aluminum block and a titanium sponge in batches; after furnace materials are melted, introducing an Ar gas, and adding a nickel alloy; applying electromagnetic stirring, and adjusting the power to allow a casting temperature; and tapping a molten steel, furnace-cooling the molten steel for a specified period of time, and subjecting a cooled molten steel to a vacuum-breaking treatment obtain a vacuum induction ingot.

Further, in the step 1, the vacuum arc remelting (VAR) includes:
S1.4.1: arranging an electrode in a crystallizer, conducting a centering treatment, and completing electrode welding in a vacuum arc furnace;
S1.4.2: adjusting a vacuum degree to less than 1 Pa and a gas leakage rate to less than 0.3 Pa/min in the vacuum arc furnace, and energizing the vacuum arc furnace to allow smelting;
S1.4.3: introducing a helium gas for cooling during the smelting; and
S1.4.4: after an ingot is obtained, cooling the ingot in the vacuum arc furnace, and subjecting a cooled ingot to a vacuum-breaking treatment with a vacuum self-consumable arc to obtain a steel ingot.

Further, in the S1.4.3, the introducing a helium gas for cooling during the smelting is conducted as follows: according to a flow rate control, increasing a helium flow rate from 0 mL/min to 110 mL/min within the first 0.5 h, and decreasing the helium flow rate from 110 mL/min to 20 mL/min at a hot topping stage of 0.5 h.

Further, in the step 8, a microstructure of the disc-shaft integrated turbine disc mainly includes equiaxed austenite grains, carbides evenly distributed, and γ' phases diffusely distributed; and the carbides mainly include M₂₃C₆ and MC, where M₂₃C₆ is short rod-shaped and is discontinuously distributed at grain boundaries, and MC is block-shaped and is discontinuously distributed in grains.

Compared with the prior art, the present invention has the following beneficial effects:
a) In the disc-shaft integrated turbine disc of the present invention, contents of individual elements such as C, Cr, Co, Al, and Ti in an alloy are accurately controlled to improve a solid-solution strengthening effect and a grain boundary strength for the alloy. Ti/Al and (Al + Ti) values are coordinatively controlled to ensure the optimal matching between a content and a size of the γ' phases in the disc-shaft integrated turbine disc. Contents of O, N, S, and P are accurately controlled to reduce a content of inclusions and improve the purity, plasticity, and fatigue performance of an alloy for the disc-shaft integrated turbine disc, thereby ensuring the uniformity of grains, the precipitation and distribution of grain boundary phases, and the comprehensive properties of the disc-shaft integrated turbine disc.
b) In the manufacturing method of the disc-shaft integrated turbine disc of the present invention, contents of key components are controlled, and triple smelting, cogging, die forging, and heat treatment processes are adopted to obtain the disc-shaft integrated turbine disc meeting requirements of aerospace engines working at 700°C. The disc-shaft integrated turbine disc has uniform fine grains (a grain-size number reaches 6.5 or more, such as 7 to 8; and grains of different parts are uniform and consistent, and a grain-size number difference is 2 or less), a low crack growth rate, and excellent comprehensive properties during long-term service.
c) Properties of the disc-shaft integrated turbine disc of the present invention are as follows: tensile properties at room temperature: tensile strength σ_{b}: higher than or equal to 1,300 MPa (such as 1,330 MPa to 1,420 MPa), yield strength σ_{0.2}: higher than or equal to 1,000 MPa (such as 1,010 MPa to 1,050 MPa), elongation at break δ₅: higher than or equal to 20.0% (such as 21% to 24%), and section shrinkage rate ψ: higher than or equal to 24.0% (such as 25% to 36%); tensile properties at 535°C: tensile strength σ_{b}: higher than or equal to 1,200 MPa (such as 1,210 MPa to 1,320 MPa), yield strength σ_{0.2}: higher than or equal to 875 MPa (such as 885 MPa to 950 MPa), elongation at break δ₅: higher than or equal to 19% (such as 19% to 22%), and section shrinkage rate ψ: higher than or equal to 23% (such as 24% to 29%); durability at 730°C/550 MPa: duration τ: longer than or equal to 35 h (such as 41 h to 47 h); durability at 815°C/295 MPa: duration τ: longer than or equal to 52 h (such as 53 h to 70 h), and elongation at break δ₅: higher than or equal to 12% (such as 13% to 18%); and LCF performance: 500°C/strain control: 0% to 0.7%/0.33 Hz, and more than 3 × 10⁴ cycles (such as 33,884 to 47,323).
d) The disc-shaft integrated turbine disc of the present invention has a small discrete degree in tensile strengths and yield strengths at room temperature and 535°C, with a coefficient of variation (CV) value of 2.63% to 4.75%. The disc-shaft integrated turbine disc has a Cv value of less than 15% in elongations at break and section shrinkage rates, which is in a normal range and indicates a small discrete degree. The properties of the disc-shaft integrated turbine disc fluctuate little.

Other features and advantages of the present invention will be described in the following description, and some of these will become apparent from the description or be understood by implementing the present invention. The objectives and other advantages of the present invention may be implemented and obtained by the structure particularly pointed out in the specification, claims, and accompanying drawings.

### BRIEF DESCRIPTION OF THE DRAWINGS

The accompanying drawings are provided merely to illustrate the specific embodiments, rather than to limit the present invention. The same reference numerals represent the same components throughout the accompanying drawings.
FIG. 1 is a schematic diagram of an overall structure of the disc-shaft integrated turbine disc of the present invention;
FIG. 2 is a schematic diagram of positions for detection of grain sizes in the disc-shaft integrated turbine disc of the present invention;
FIG. 3 is an image illustrating grains of the disc-shaft integrated turbine disc in Example 1 of the present invention;
FIG. 4 is an image illustrating a microstructure of the disc-shaft integrated turbine disc in Example 1 of the present invention; and
FIG. 5 is an image illustrating grains of Comparative Example 4.

Reference numerals:
1: disc portion, and 2: shaft portion.

### DETAILED DESCRIPTION OF THE EMBODIMENTS

Preferred embodiments of the present invention will be described in detail below with reference to the accompanying drawings. The accompanying drawings constitute a part of the present invention, and are provided together with the embodiments of the present invention to explain the principles of the present invention.

The inventors have found through in-depth research that the existing disc-shaft integrated turbine disc has a too-wide composition range, a wide manufacturing process window, and a high C content, and includes grain boundary phases that are at a high content and a high degree of distribution and dispersion and are difficult to control stably during thermal deformation, which easily causes mixed crystals. As a result, properties of the existing disc-shaft integrated turbine disc fluctuate largely, and are difficult to meet comprehensive requirements of rotating components for both high-temperature durability and LCF performance. Therefore, through in-depth research, the inventors provide a disc-shaft integrated turbine disc capable of working for a long time at 700°C by accurately controlling a composition and process of the disc-shaft integrated turbine disc.

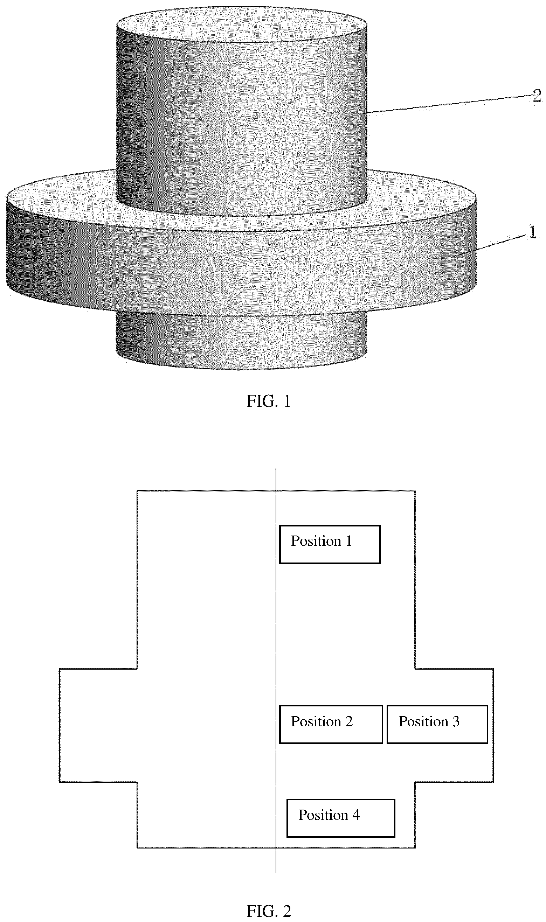

The present invention provides a disc-shaft integrated turbine disc, as shown in FIG. 1 and FIG. 2. The disc-shaft integrated turbine disc includes a disc portion 1 and a shaft portion 2 penetrating through the disc portion 1, where the disc portion 1 and the shaft portion 2 are integrally formed; and a material of the disc-shaft integrated turbine disc is a nickel-base superalloy, and specifically, the nickel-base superalloy includes the following components in mass percentages: C: 0.02% to 0.04%, Cr: 18.5% to 20.0%, Co: 13.0% to 14.0%, Mo: 4.0% to 4.90%, Al: 1.3% to 1.6%, Ti: 2.80% to 3.25%, Ti/Al: 2.25 to 2.38, (Al + Ti): 4.35% to 4.58%, O: less than or equal to 20 ppm, N: less than or equal to 20 ppm, S: less than or equal to 10 ppm, P: less than or equal to 80 ppm, and nickel: the balance.

Specifically, a total mass percentage of O + N + S is less than or equal to 50 ppm.

Effects and contents of components in the disc-shaft integrated turbine disc of the present invention are specifically described as follows:
C: C in the nickel-base superalloy mainly affects mechanical properties of the material through generation of a MC carbide during solidification and precipitation of M₂₃C₆ and M₆C during a heat treatment. The granular discontinuous carbide M₂₃C₆ precipitated at grain boundaries can prevent grain boundary sliding (GBS) and crack growth and improve the endurance life, endurance plasticity, and toughness. A too-high C content can easily increase the precipitation of MC and M₂₃C₆, and increase the non-uniformity of distribution of M₂₃C₆ at grain boundaries. The inventors have found through in-depth research that, when a C content is 0.01%, 0.03%, 0.04%, 0.05%, and 0.1%, a content of M₂₃C₆ is 0.19%, 0.58%, 0.78%, 0.97%, and 1.95%, respectively. When the C content is less than 0.04%, the carbides are discontinuously distributed at grain boundaries. When the C content is more than 0.04%, the carbides begin to be continuously distributed at grain boundaries. When the C content is 0.06%, there are both small-size continuous carbides and large-size discrete carbides distributed at grain boundaries, with an average size of 3 µm, which also reduces an endurance life of the alloy. Therefore, the C content is controlled at 0.02% to 0.04% in the present invention.

Cr: Cr is an indispensable alloying element in the nickel-base superalloy, and mainly plays the following roles: (1) Solid-solution strengthening: Cr in a superalloy matrix γ causes lattice distortion to strengthen an elastic stress field, thereby increasing a strength of a γ solid solution. (2) Precipitation strengthening: Cr dissolved in the γ solid solution can also produce a series of carbides with C, mainly including M₂₃C₆-type carbides. These carbides are mainly distributed at grain boundaries. Granular discontinuous carbides evenly distributed at grain boundaries can effectively prevent GBS and grain boundary migration (GBM) and improve an endurance strength. (3) Antioxidation: A very important role of Cr in the γ matrix is to form a Cr₂O₃ oxide film, which has excellent oxidation resistance. The higher the Cr content, the better the oxidation resistance. Given a cost of the alloy, the Cr content is controlled at 18.5% to 20.0%.

Co: Co is one of the major solid-solution strengthening elements of the nickel-base superalloy. Co added to the γ matrix can reduce a stacking-fault energy (SFE) of the matrix. After the SFE is reduced, a probability of occurring stacking faults is increased to make a cross slip of a dislocation difficult, such that a deformation requires an increased external force, which is manifested as the improvement of a strength. Moreover, after the SFE is reduced, a creep rate is reduced, and the creep resistance is increased. In addition, Co can reduce a solubility of the y'-forming elements Ti and Al in the matrix, thereby increasing a number of γ' precipitated phases in the alloy and increasing a service temperature of the alloy. However, Co is a scarce resource in China. Thus, given a cost of the alloy, the Co content is controlled at 13.0% to 14.0% in the present invention.

Mo: Mo enters a matrix of the nickel-base superalloy and mainly plays a role of solid-solution strengthening. In particular, when the Co content is reduced to reduce a cost and thus a solid-solution strengthening effect of Co is weakened, the solid-solution strengthening of Mo is supplemented, which is also one of the features of the present invention. The Mo content is controlled at 4.0% to 4.9% in the present invention.

Al: Al is a major element for formation of a γ' phase. About 20% of Al added to the alloy enters a γ solid solution and plays a role of solid-solution strengthening; and about 80% of Al added to the alloy produces Ni₃Al with Ni to play a role of precipitation strengthening. In order to ensure that there are γ' phases necessary to maintain a high-temperature strength at 700°C in the alloy, the Al content in the alloy is controlled at 1.3% to 1.6% in the present invention.

Ti: About 10% of Ti added to the nickel-base superalloy enters a γ solid solution to play a role of solid-solution strengthening to some extent; and about 90% of Ti added to the nickel-base superalloy enters a γ' phase. At a specified Al content, with the increase of a Ti content, a number of γ' phases increases and a high-temperature strength of the alloy increases. In order to ensure that there are γ' phases necessary to maintain a high-temperature strength at 700°C in the alloy, the present invention limits the Ti content to 2.80% to 3.25%, a Ti/Al ratio to 2.25 to 2.38, and a (Al + Ti) content to 4.35% to 4.58%.

O: The reduction of O and N contents can reduce a content of inclusions in the material, which is conducive to improvement of plasticity and toughness of the alloy. During melting of the alloy, N is easy to produce Ti(C,N) with Ti, and the increase of Ti(C,N) can increase a possibility of producing a fatigue source and reduce a Ti content required by γ' strengthening phases. Therefore, in the present invention, an O content needs to be controlled at less than or equal to 20 ppm, and an N content needs to be controlled at less than or equal to 20 ppm.

S: A too-high S content will compromise the plasticity and long-term properties of the alloy. At a late stage of smelting of the alloy, the higher the S content, the easier it is for sulfides to precipitate. S has a significant impact on the nickel-base superalloy at 800°C or higher, which is obvious during steel ingot smelting and cogging. The inventors have found through research that there is a smelting failure in an experimental group with an S content of 100 ppm, a steel ingot is heavily cracked during cogging in an experimental group with an S content of 56 ppm, and when an S content exceeds 10 ppm, the endurance life and plasticity at 730°C decrease to varying degrees. Therefore, the S content needs to be controlled at less than or equal to 10 ppm in the present invention.

P: With the increase of a P content, an endurance life of the nickel-base superalloy decreases sharply. The inventors have found through research that the endurance life of the nickel-base superalloy at 730°C is less than 25 h when the P content exceeds 80 ppm, the endurance life of the nickel-base superalloy at 730°C is merely 2 h when the P content exceeds 100 ppm, and the nickel-base superalloy has a significant notch sensitivity for a long time at 730°C when the P content exceeds 80 ppm. Therefore, the P content needs to be controlled at less than or equal to 80 ppm in the present invention.

In order to further improve comprehensive properties of the disc-shaft integrated turbine disc, the nickel-base superalloy can include the following components in mass percentages: C: 0.026% to 0.037%, Cr: 18.5% to 19.7%, Co: 13.0% to 13.98%, Mo: 4.10% to 4.70%, Al: 1.3% to 1.45%, Ti: 2.95% to 3.25%, Ti/Al: 2.26 to 2.38, (Al + Ti): 4.36% to 4.58%, O: less than or equal to 10 ppm, N: less than or equal to 20 ppm, S: less than or equal to 8 ppm, P: less than or equal to 40 ppm, and nickel: the balance.

Specifically, a total mass percentage of O + N + S is less than or equal to 40 ppm.

A microstructure of the disc-shaft integrated turbine disc mainly includes equiaxed austenite grains, carbides evenly distributed, and γ' phases diffusely distributed. The carbides mainly include M₂₃C₆ and MC, where M₂₃C₆ is short rod-shaped and is discontinuously distributed at grain boundaries, and a content of M₂₃C₆ is 0.5% to 0.75% (mass fraction); and MC is block-shaped and is discontinuously distributed in grains, and a content of MC is 0.1% to 0.2% (mass fraction). The γ' phases are spherical, are diffusely distributed in grains, and have a particle size of 60 nm to 200 nm. A content of the γ' phases is 24% to 26%, where a content of γ' phases with a particle size of 60 nm to 100 nm is 12% to 16%, and a content of γ' phases with a particle size of greater than 100 nm is 8% to 14%.

Specifically, the disc-shaft integrated turbine disc has a grain-size number of 6.5 or more, such as 7 to 8, and grains of different parts of the disc-shaft integrated turbine disc are uniform and consistent, with a grain-size number difference of 2 or less (for example, the grain-size number difference is 1.5 or less).

The present invention also provides a preparation method of the disc-shaft integrated turbine disc, including the following steps.

Step 1: designing a closed mold according to a shape of the product, and selecting an appropriate bar billet according to a blanking weight.

Step 2: applying a thermally-insulating coating to a side and end faces of the bar billet, and then wrapping a soft jacket around the bar billet (that is, a thermally-insulating cotton is wrapped).

Step 3: upsetting the bar billet at 1,030°C to 1,060°C to obtain a cake billet.

Step 4: removing the soft jacket from the cake billet, and cooling.

Step 5: wrapping a jacket around the cake billet, and then subjecting the cake billet to closed-die forging at 1,030°C to 1,060°C to obtain a forging.

Step 6: removing the jacket from the forging, and cooling.

Step 7: subjecting the forging to a solid-solution treatment.

Step 8: stabilizing and aging the forging to obtain the disc-shaft integrated turbine disc.

In the step 1, in order to ensure a qualified composition and uniform grains of the bar billet, a manufacturing method of the bar billet needs to be accurately controlled. The bar billet is obtained through vacuum induction melting (VIM), electroslag remelting (ESR), vacuum arc remelting (VAR), and homogenization.

Specifically, a manufacturing method of the bar billet in the step (1) includes:
Step 1.1: Raw materials are weighed according to a composition of an alloy.
Step 1.2: the vacuum induction melting (VIM) is conducted, including:
   S1.2.1: Raw material loading: a nickel plate, a carbon powder, a cobalt block, and a molybdenum strip are loaded into a vacuum induction furnace in batches, and after furnace materials are completely loaded into the vacuum induction furnace, the vacuum induction furnace is vacuumed to a vacuum degree of less than or equal to 0.1 Pa and then energized.
   S1.2.2: Melting and refining: Baking is conducted at a low power of 50 kw to 100 kw to allow vacuuming, and a power is allowed to undergo a gradient increase (such as 200 kw, 400 kw, and 600 kw) to 1,000 kw to 1,500 kw; after the furnace materials are fully melted, a remaining nickel plate, a remaining carbon powder, and a remaining cobalt block are added; and after furnace materials are completely melted, a resulting alloy liquid is electromagnetically stirred to promote a rapid reduction of O and N contents, where a temperature during the melting is controlled at 1,500°C to 1,560°C and a temperature during the refining is controlled at 1,500°C to 1,560°C.
   S1.2.3: Discharging and casting: The power is reduced, and heat preservation is conducted; an aluminum block and a titanium sponge are added in batches; after furnace materials are melted, an Ar gas is introduced to a pressure of 20,000 Pa to 30,000 Pa, and a nickel alloy is added; electromagnetic stirring is applied to promote melting and homogenization of components, and the power is adjusted to allow a casting temperature; and a molten steel is tapped with a tapping temperature of 1,450°C to 1,510°C, furnace-cooled for a specified period of time, and subjected to a vacuum-breaking treatment to obtain a vacuum induction ingot.
   S1.2.4: Surface treatment: The vacuum induction ingot is cooled, subjected to riser cut-off, and subjected to surface polishing to obtain a first electrode, which facilitates the subsequent ESR.
Step 1.3: ESR is conducted, including:
   S1.3.1: A premelted slag including 45% to 65% of CaF₂, 15% to 25% of Al₂O₃, 15% to 25% of CaO, 2% to 8% of MgO, and 0% to 5% of TiO₂ is adopted.
   S1.3.2: The first electrode is welded, polished, and loaded into an ESR furnace, an argon gas is introduced at an argon flow rate of no less than 30 L/min, and then slag formation, arc starting, remelting, and shrinkage compensation are conducted; and an ingot furnace is cooled for 2 h, and then demolding is conducted to obtain an ESR ingot, where a melting rate is controlled at 3.7 Kg/min to 4.2 Kg/min during the remelting and a water temperature is controlled at 28°C to 35°C during the remelting.
   S1.3.3: The ingot is subjected to surface turning with a unilateral turning amount of 5 mm to 10 mm and a diameter controlled at 400 mm to 420 mm to obtain a second electrode, which facilitates the subsequent VAR.

The ESR in the above way can effectively reduce an S content in an alloy.

Step 1.4: VAR is conducted, including:
S1.4.1: A crystallizer in a vacuum arc furnace is cleaned, then the second electrode is arranged in the crystallizer, a centering treatment is conducted, and electrode welding is completed in the vacuum arc furnace.
S1.4.2: A vacuum degree is adjusted to less than 1 Pa and a gas leakage rate is adjusted to less than 0.3 Pa/min in the vacuum arc furnace, and then the vacuum arc furnace is energized to allow smelting.
S1.4.3: A helium gas is introduced for cooling during the smelting as follows: according to a flow rate control, a helium flow rate is increased from 0 mL/min to 110 mL/min within the first 0.5 h, and then decreased from 110 mL/min to 20 mL/min at a hot topping stage of 0.5 h.
S1.4.4: After an ingot is obtained, the ingot is cooled in the vacuum arc furnace for a specified period of time, and then subjected to a vacuum-breaking treatment with a vacuum self-consumable arc to obtain a steel ingot.

Step 1.5: The steel ingot is subjected to homogenization to obtain the bar billet.

Specifically, in the S1.2.1, large-size raw materials are spread at a bottom of the vacuum induction furnace as far as possible to prevent the occurrence of bridging during melting.

Specifically, in the S1.2.1, a crucible during a middle number of heats (more than 10 heats) is adopted for smelting, which can effectively reduce contents of gas elements because a wall of the crucible undergoes serious gas release during early heats of the crucible.

Specifically, in the S1.2.1, a first part of the nickel plate and a first part of the carbon powder are first loaded into the vacuum induction furnace; a second part of the nickel plate, a second part of the carbon powder, a first part of the cobalt block, and the molybdenum strip are then loaded into the vacuum induction furnace; and a second part of the cobalt block and a third part of the carbon powder are then loaded into the vacuum induction furnace.

Specifically, in the S1.2.1, a mass of the first part of the nickel plate is 1/2 to 2/3 of a total mass of the nickel plate; a mass of the first part of the carbon powder is about 1/4 of the total mass of the carbon powder; a mass of the second part of the nickel plate is about 1/6 of the total mass of the nickel plate; a mass of the second part of the carbon powder is about 1/4 of the total mass of the carbon powder; a mass of the first part of the cobalt block is about 1/2 of a total mass of the cobalt block; a mass of the second part of the cobalt block is about 1/2 of the total mass of the cobalt block; and a mass of the third part of the carbon powder is about 1/4 of the total mass of the carbon powder.

Specifically, in the S1.2.1, the increase of a vacuum degree during refining will promote a carbon-oxygen reaction, and the floating of CO bubbles is conducive to the precipitation of H and N, the floating of non-metallic inclusions, the decomposition of nitrides, and the volatilization of trace harmful elements. However, a too-high vacuum degree will aggravate a reaction between the crucible and a metal and increase volatilization losses of alloying elements. Therefore, the vacuum induction furnace is vacuumed to a vacuum degree of less than or equal to 0.1 Pa and then energized.

Specifically, in the S1.2.3, the third group of raw materials including an aluminum block and a titanium sponge are added in 3 batches, which is specifically as follows: a first part of the titanium sponge and a first part of the aluminum block are first added; a second part of the titanium sponge and a second part of the aluminum block are then added; and after an interval of 8 min to 12 min, a third part of the aluminum block is added. A mass ratio of the first part of the titanium sponge to the second part of the titanium sponge is about 1:1; and the first part of the aluminum block, the second part of the aluminum block, and the third part of the aluminum block are in a mass ratio of about 1:1:1.

Specifically, in the S1.2.3, the addition of Ti can reduce inclusions of Ti, such as generation of Ti (C, N).

Specifically, in the S1.2.3, the addition of Al in batches can reduce an exothermic temperature rise, and the addition of Al and Ti in batches can also control contents of Al and Ti.

Specifically, in the S1.4.3, the control of increasing a helium flow rate from 0 mL/min to 110 mL/min within the first 0.5 h and decreasing the helium flow rate from 110 mL/min to 20 mL/min at a hot topping stage of 0.5 h can make a bottom of a melt pool move upwards and change from the original inverted cone shape to a flat disc shape. In addition, the above control can reduce a mushy zone, reduce a diffusion distance of a metal element during solidification, and reduce a segregation tendency of an alloy.

Specifically, in the S1.4.3, a melting rate of vacuum self-consumption remelting affects a microporosity of an alloy. In order to reduce this defect, the melting rate is controlled at 3.4 kg/min to 4.0 kg/min, and a temperature of cooling water is controlled at 18°C to 28°C.

Specifically, in the step 1.5, the homogenization annealing is conducted to eliminate low-melting-point phases and alleviate elemental segregation in the steel ingot. The homogenization adopts two-stage heat preservation, where first-stage heat preservation is conducted at a relatively-low temperature and is mainly intended to eliminate low-melting-point phases in an alloy; and second-stage heat preservation is conducted to promote the uniform diffusion of segregated elements. Specifically, the homogenization includes the following steps:
S1.5.1: the steel ingot is heated to a temperature of 1,150°C to 1,165°C and kept at this temperature for 47 h to 49 h; and
S1.5.2: the steel ingot is further heated to a temperature of 1,180°C to 1,195°C, kept at this temperature for 65 h to 67 h, and then air-cooled.

Specifically, in the S1.5.1, the steel ingot is slowly heated from a furnace temperature of lower than or equal to 400°C to the temperature of 1,150°C to 1,165°C within 10 h to 15 h.

Specifically, in the S1.5.1, a too-high temperature and a too-long holding time do not play a positive role in remelting of low-melting-point phases, and long-term heat preservation at a high temperature will increase a thickness of an oxide layer on a surface of the steel ingot and the growth of grains, which is not conducive to subsequent forging. However, a too-low temperature and a too-short holding time cannot ensure the complete remelting of low-melting-point phases, and the residual low-melting-point phases are easy to become crack sources of forging. Therefore, the steel ingot is heated to 1,150°C to 1,165°C and the holding time is controlled to be in accordance with a size of the steel ingot to allow the complete remelting of low-melting-point phases.

Specifically, in the S1.5.2, the higher the temperature and the longer the holding time, the more sufficient the remelting of segregated elements. However, when the temperature and the holding time reach matching equilibrium points, the remelting of segregated elements will remain stable. The inventors have found through in-depth research that the homogenization can be completed when a residual segregation coefficient reaches 0.2. Therefore, a too-high temperature and a too-long holding time have little positive effects on the remelting of segregated elements, but will cause coarse grains, energy waste, and reduced production efficiency. A too-low temperature and a too-short holding time cannot ensure that most of segregated elements are remelted, and related dendritic segregation will reduce the hot-working plasticity during forging. Therefore, the steel ingot is further heated to a temperature of 1,180°C to 1,195°C and the holding time is controlled to be in accordance with a size of the steel ingot, such that a residual segregation coefficient can reach 0.2.

Specifically, in the step 1, a composition of the bar billet is as follows: C: 0.02% to 0.04%, Cr: 18.5% to 20.0%, Co: 13.0% to 14.0%, Mo: 4.0% to 4.90%, Al: 1.3% to 1.6%, Ti: 2.80% to 3.25%, Ti/Al: 2.25 to 2.38, (Al + Ti): 4.35% to 4.58%, O: less than or equal to 20 ppm, N: less than or equal to 20 ppm, S: less than or equal to 10 ppm, P: less than or equal to 80 ppm, and nickel: the balance.

Specifically, the manufacturing method of the bar billet further includes:
Step 1.6: The bar billet kept at 1,150°C to 1,200°C is subjected to multiple times of upset forging and drawing-out, and radial forging successively.

Specifically, in the step 1.6, a deformation amount of each upset forging is 30% to 50%, and a deformation amount of each drawing-out is 30% to 60%; and the holding temperature drops by 40°C to 50°C after each upset forging and drawing-out until the holding temperature drops to 1,050°C to 1,120°C. If a deformation amount of each heat is too large, an alloy has a risk of cracking. Moreover, a too-large deformation amount causes a risk of mixed crystals in a large deformation zone of a grain structure of an alloy. If a deformation amount of each heat is too small, an alloy undergoes insufficient deformation, and the grain crushing and recrystallization cannot be completed.

Specifically, in the step 2, a thickness of the thermally-insulating cotton is 10 mm to 15 mm.

In the step 3, the upsetting adopts primary hot-pressing with a deformation amount of 50% to 60% and a depression rate of 5 mm/s to 10 mm/s. The upsetting is conducted at 1,030°C to 1,060°C. In this temperature range, an alloy is in a single-phase zone as a whole, and a plastic deformation can be sufficient. After the forging is completed, a temperature drops, and γ' phases are precipitated, which can provide a pinning effect for grain refinement and slow down growth of grains.

Specifically, in the step 5, the closed-die forging adopts primary hot-pressing with a deformation amount of 50% to 60% and a depression rate of 5 mm/s to 10 mm/s. The design of closed-die forging can not only reduce the blanking weight, but also allow design of a mold shape based on deformation characteristics of the disc portion and the shaft portion to control deformation amounts of different parts.

In the step 7, the solid-solution treatment is conducted as follows: the second forging is heated to a temperature of 995°C to 1,050°C, kept at this temperature for 3.5 h to 4.5 h, and then oil-cooled. If a heating rate for the heating is too high, a core of an alloy will not reach a solid-solution temperature, resulting in insufficient holding time. Therefore, the second forging is heated slowly from a furnace temperature of lower than or equal to 400°C with a heating rate controlled at 4°C/min to 6°C/min. A too-high temperature or a too-long holding time will cause growth of grains, which is not conducive to properties of an alloy. A too-low temperature or a too-short holding time makes it impossible to completely or partially dissolve γ phases to be ready for acquisition of appropriate γ' phases during subsequent aging. Therefore, the second forging is heated to a temperature of 995°C to 1,050°C and kept at this temperature for 3.5 h to 4.5 h.

Specifically, in the step 8, the stabilizing and aging is conducted as follows: the third forging is heated to a temperature of 840°C to 850°C, kept at this temperature for 3 h to 4.5 h, and then air-cooled; and then heated to a temperature of 755°C to 765°C, kept at this temperature for 15 h to 17 h, and then air-cooled to room temperature.

Specifically, in the step 8, if a heating rate for the heating is too high, a core of an alloy will not reach a stabilizing and aging temperature, resulting in insufficient holding time, insufficient precipitated γ' phases, and a non-optimal number-to-size ratio of γ' phases. A too-high temperature or a too-long holding time will make γ' phases have large sizes and make a size-to-number ratio non-optimal, thereby affecting a strength of an alloy. Therefore, the third forging is slowly heated from a furnace temperature of lower than or equal to 400°C with a heating rate controlled at 4°C/min to 6°C/min.

Specifically, properties of the disc-shaft integrated turbine disc obtained in the step 8 are as follows: tensile properties at room temperature: tensile strength σ_{b}: higher than or equal to 1,300 MPa (such as 1,330 MPa to 1,420 MPa), yield strength σ_{0.2}: higher than or equal to 1,000 MPa (such as 1,010 MPa to 1,050 MPa), elongation at break δ₅: higher than or equal to 20.0% (such as 21% to 24%), and section shrinkage rate ψ: higher than or equal to 24.0% (such as 25% to 36%); tensile properties at 535°C: tensile strength σ_{b}: higher than or equal to 1,200 MPa (such as 1,210 MPa to 1,320 MPa), yield strength σ_{0.2}: higher than or equal to 875 MPa (such as 885 MPa to 950 MPa), elongation at break δ₅: higher than or equal to 19% (such as 19% to 22%), and section shrinkage rate ψ: higher than or equal to 23% (such as 24% to 29%); durability at 730°C/550 MPa: duration τ: longer than or equal to 35 h (such as 41 h to 47 h), and elongation at break δ₅: higher than or equal to 24% (such as 25% to 38%); durability at 815°C/295 MPa: duration τ: longer than or equal to 52 h (such as 53 h to 70 h), and elongation at break δ₅: higher than or equal to 12% (such as 13% to 18%); and LCF performance: 500°C/strain control: 0% to 0.7%/0.33 Hz, and more than 3 × 10⁴ cycles (such as 33,884 to 47,323).

Compared with the prior art, in the disc-shaft integrated turbine disc of the present invention, contents of individual elements such as C, Cr, Co, Al, and Ti in an alloy are accurately controlled to improve a solid-solution strengthening effect and a grain boundary strength for the alloy. Ti/Al and (Al+Ti) values are coordinatively controlled to ensure the optimal matching between a content and a size of the γ' phases in the disc-shaft integrated turbine disc. Contents of O, N, S, and P are accurately controlled to reduce a content of inclusions and improve the purity, plasticity, and fatigue performance of an alloy for the disc-shaft integrated turbine disc, thereby ensuring the uniformity of grains, the precipitation and distribution of grain boundary phases, and the comprehensive properties of the disc-shaft integrated turbine disc.

In the manufacturing method of the disc-shaft integrated turbine disc of the present invention, contents of key components are controlled, and triple smelting, cogging, die forging, and heat treatment processes are adopted to obtain the disc-shaft integrated turbine disc meeting requirements of aerospace engines working at 700°C. The disc-shaft integrated turbine disc has uniform fine grains (a grain-size number reaches 6.5 or more, such as 7 to 8; and grains of different parts are uniform and consistent, and a grain-size number difference is 2 or less), a low crack growth rate, and excellent comprehensive properties during long-term service.

### Examples 1 to 5

The advantages of accurate control of a composition and process parameters of the disc-shaft integrated turbine disc in the present invention are illustrated below through specific examples and comparative examples. In each of Examples 1 to 5 of the present invention, a disc-shaft integrated turbine disc and a manufacturing method thereof are provided.

Compositions of the disc-shaft integrated turbine discs in Examples 1 to 5 are shown in Table 1 below.

Manufacturing methods of the disc-shaft integrated turbine discs in Examples 1 to 5 are as follows:

### Example 1

Step 1: designing a closed mold according to a shape of the product, and selecting an appropriate bar billet according to a blanking weight. The blanking weight was 90 ± 1 kg, and the bar billet had a specification of φ180 mm × 430 mm and a specification tolerance of ± 1 mm.

Step 2: applying a thermally-insulating coating to a side and end faces of the bar billet, and then wrapping a thermally-insulating cotton around the bar billet.

Step 3: the bar billet was heated to a temperature of 1,030°C and kept at this temperature for 6 h in a heating furnace, and then upset at a pressing rate of 10 mm/s to obtain a cake billet. A height of the cake billet was accurately controlled at 190 ± 1 mm.

Step 4: removing the soft jacket from the cake billet, and cooling.

Step 5: A soft jacket was wrapped around the cake billet, and the cake billet was heated to a temperature of 1,030°C and kept at this temperature for 6 h in a heating furnace, and then subjected to closed-die forging in a closed-die forging mold to obtain a forging. Deformation amounts of the upsetting and the closed-die forging each were 50%.

Step 6: The forging was subjected to soft jacket removal and then cooled.

Step 7: Solid-solution treatment: The forging was heated at a heating rate of 5°C/min from a furnace temperature of 400°C to 1,025°C, kept at 1,025°C for 4.5 h, and then oil-cooled.

Step 8: Stabilizing and aging: The forging was heated at a heating rate of 5°C/min from a furnace temperature of 400°C to 850°C, kept at 850°C for 4.5 h, and then air-cooled; and then heated at a heating rate of 5°C/min from a furnace temperature of 400°C to 765°C, kept at 765°C for 17 h, and then air-cooled to room temperature to obtain a disc-shaft integrated turbine disc.

Specifically, a manufacturing method of the bar billet in the step 1 included:
Step 1.1: Raw materials were weighed according to a composition of an alloy.
Step 1.2: VIM:
   S1.2.1: Raw material loading: A first part of a nickel plate and a first part of a carbon powder were first loaded into a vacuum induction furnace; a second part of a nickel plate, a second part of the carbon powder, a first part of a cobalt block, and a molybdenum strip were then loaded into the vacuum induction furnace; and a second part of the cobalt block and a third part of the carbon powder were then loaded into the vacuum induction furnace. After furnace materials were completely loaded into the vacuum induction furnace, the vacuum induction furnace was vacuumed to a vacuum degree of less than or equal to 0.1 Pa and then energized.

A mass of the first part of the nickel plate was about 2/3 of a total mass of the nickel plate; a mass of the first part of the carbon powder was about 1/4 of the total mass of the carbon powder; a mass of the second part of the nickel plate was about 1/6 of the total mass of the nickel plate; a mass of the second part of the carbon powder was about 1/4 of the total mass of the carbon powder; a mass of the first part of the cobalt block was about 1/2 of a total mass of the cobalt block; a mass of the second part of the cobalt block was about 1/2 of the total mass of the cobalt block; and a mass of the third part of the carbon powder was about 1/4 of the total mass of the carbon powder.

S1.2.2: Melting and refining: Baking was conducted at a low power of 50 kw to 100 kw to allow vacuuming, and a power was allowed to undergo a gradient increase (such as 200 kw, 400 kw, and 600 kw) to 1,000 kw to 1,500 kw; after furnace materials were fully melted, a remaining nickel plate, a remaining carbon powder, and a remaining cobalt block were added; and after furnace materials were completely melted, a resulting alloy liquid was electromagnetically stirred to promote a rapid reduction of O and N contents, where a temperature during the melting was controlled at 1,500°C to 1,560°C and a temperature during the refining was controlled at 1,500°C to 1,560°C.

S1.2.3: Discharging and casting: The power was reduced, and heat preservation was conducted; an aluminum block and a titanium sponge were added in batches (a first part of the titanium sponge and a first part of the aluminum block were first added; a second part of the titanium sponge and a second part of the aluminum block were then added; and after an interval of 8 min to 12 min, a third part of the aluminum block was added, where a mass ratio of the first part of the titanium sponge to the second part of the titanium sponge was about 1:1; and the first part of the aluminum block, the second part of the aluminum block, and the third part of the aluminum block were in a mass ratio of about 1:1:1); after the third group of raw materials were melted, an Ar gas was introduced to a pressure of 20,000 Pa to 30,000 Pa, and a nickel alloy was added; electromagnetic stirring was applied to promote melting and homogenization of components, and the power was adjusted to allow a casting temperature; and a molten steel was tapped with a tapping temperature of 1,450°C to 1,510°C, furnace-cooled for a specified period of time, and subjected to a vacuum-breaking treatment to obtain a vacuum induction ingot.

S1.2.4: Surface treatment: The vacuum induction ingot was cooled, subjected to riser cut-off, and subjected to surface polishing to obtain a first electrode, which facilitated the subsequent ESR.

Step 1.3: ESR:
S1.3.1: A premelted slag including 45% to 65% of CaF₂, 15% to 25% of Al₂O₃, 15% to 25% of CaO, 2% to 8% of MgO, and 0% to 5% of TiO₂ was adopted.
S.3.2: An electrode was welded, polished, and loaded into an ESR furnace, an argon gas was introduced at an argon flow rate of no less than 30 L/min, and then slag formation, arc starting, remelting, and shrinkage compensation were conducted; and an ingot furnace was cooled for 2 h, and then demolding was conducted to obtain an ESR ingot, where a melting rate was controlled at 3.7 Kg/min to 4.2 Kg/min during the remelting and a water temperature was controlled at 28°C to 35°C during the remelting.
S1.3.3: The ESR ingot was subjected to surface turning with a unilateral turning amount of 5 mm to 10 mm and a diameter controlled at 400 mm to 420 mm to facilitate the subsequent VAR.

Step 1.4: VAR:
S1.4.1: A crystallizer in a vacuum arc furnace was cleaned, then the electrode was arranged in the crystallizer, a centering treatment was conducted, and electrode welding was completed in the vacuum arc furnace.
S1.4.2: A vacuum degree was adjusted to less than 1 Pa and a gas leakage rate was adjusted to less than 0.3 Pa/min in the vacuum arc furnace, and then the vacuum arc furnace was energized to allow smelting.
S1.4.3: A helium gas was introduced for cooling during the smelting as follows: according to a flow rate control, a helium flow rate was increased from 0 mL/min to 110 mL/min within the first 0.5 h, and then decreased from 110 mL/min to 20 mL/min at a hot topping stage of 0.5 h. A melting rate was controlled at 3.6 kg/min to 4.0 kg/min, and a temperature of cooling water was controlled at 18°C to 24°C.
S1.4.4: After an ingot was obtained, the ingot was cooled in the vacuum arc furnace for a specified period of time, and then subjected to a vacuum-breaking treatment with a vacuum self-consumable arc to obtain a VAR ingot of Φ 508 mm.

Step 1.5: Homogenization annealing: The VAR ingot was heated from 400°C to 1,150°C within 11 h and kept at 1,150°C for 47 h; further heated to 1,180°C and kept at 1,180°C for 65 h; and then air-cooled to obtain a crude bar billet.

Step 1.6: Fabrication of a finished bar billet through rapid forging + radial forging: The crude bar billet kept at 1,200°C was subjected to three times of upset forging and drawing-out, and radial forging successively. A deformation amount of each upset forging was 30%, and a deformation amount of each drawing-out was 30%. The holding temperature dropped by 40°C after each upset forging and drawing-out until the holding temperature dropped to 1,080°C, and then multi-pass cogging was conducted on a radial forging machine to obtain a finished bar billet.

### Example 2

A manufacturing method in this example was roughly the same as the manufacturing method in Example 1, except that:
In the S1.3.1, a premelted slag including 65% of CaF₂, 25% of Al₂O₃, 25% of CaO, 8% of MgO, and 5% of TiO₂ was adopted.

Step 1.5: Homogenization annealing: The VAR ingot was heated from 400°C to 1,165°C within 15 h and kept at 1,165°C for 49 h; further heated to 1,195°C and kept at 1,195°C for 67 h; and then air-cooled to obtain a crude bar billet.

Step 1.6: The crude bar billet kept at 1,200°C was subjected to three times of upset forging and drawing-out, and radial forging successively. A deformation amount of each upset forging was 50%, and a deformation amount of each drawing-out was 60%. The holding temperature dropped by 50°C after each upset forging and drawing-out until the holding temperature dropped to 1,050°C, and then multi-pass cogging was conducted on a radial forging machine to obtain a finished bar billet.

In the steps 3 and 5, the temperatures both were 1,060°C.

Step 7: Solid-solution treatment: The forging was heated at a heating rate of 5°C/min from a furnace temperature of 400°C to 1,025°C, kept at 1,025°C for 4.5 h, and then oil-cooled.

Step 8: The forging was heated at a heating rate of 5°C/min from a furnace temperature of 400°C to 850°C, kept at 850°C for 4.5 h, and then air-cooled; and then heated at a heating rate of 5°C/min from a furnace temperature of 400°C to 765°C, kept at 765°C for 17 h, and then air-cooled to room temperature to obtain a disc-shaft integrated turbine disc.

### Example 3

A manufacturing method in this example was roughly the same as the manufacturing method in Example 1, except that:
In the S1.3.1, a premelted slag including 55% of CaF₂, 20% of Al₂O₃, 20% of CaO, 5% of MgO, and 3% of TiO₂ was adopted.

Step 1.5: Homogenization annealing: The VAR ingot was heated from 400°C to 1,160°C within 13 h and kept at 1,160°C for 48 h; further heated to 1,190°C and kept at 1,190°C for 66 h; and then air-cooled to obtain a alloy bar billet.

Step 1.6: The alloy bar billet kept at 1180°C was subjected to three times of upset forging and drawing-out, and radial forging successively. A deformation amount of each upset forging was 50%, and a deformation amount of each drawing-out was 50%. The holding temperature dropped by 40°C after each upset forging and drawing-out until the holding temperature dropped to 1060°C, and then multi-pass cogging was conducted on a radial forging machine to obtain a finished bar billet.

In the steps 3 and 5, the temperatures both were 1,050°C; and deformation amounts of the upsetting and the closed-die forging each were 60%.

Step 7: Solid-solution treatment: The forging was heated at a heating rate of 5°C/min from a furnace temperature of 400°C to 1,020°C, kept at 1,020°C for 4 h, and then oil-cooled.

Step 8: The forging was heated at a heating rate of 5°C/min from a furnace temperature of 400°C to 845°C, kept at 845°C for 4 h, and then air-cooled; and then heated at a heating rate of 5°C/min from a furnace temperature of 400°C to 760°C, kept at 760°C for 16 h, and then air-cooled to room temperature.

Examples 4 and 5 were basically the same as Example 3, except that there were different chemical compositions of the steel, as shown in Table 1.

The present invention also provides 5 comparative examples. Chemical compositions of disc-shaft integrated turbine discs in Examples 1 to 5 and Comparative Examples 1 to 5 are shown in Table 1.

A composition of Comparative Example 4 was the same as a composition of Example 1. In a manufacturing method of Comparative Example 4, the closed-die forging was conducted at 1,090°C, and deformation amounts of the upsetting and the closed-die forging were 30% and 40%, respectively.

Compositions of Comparative Examples 1 to 3 and 5 were different from a composition of Example 3, and manufacturing methods of Comparative Examples 1 to 3 and 5 were the same as a manufacturing method of Example 3.

**Table 1 Chemical components, wt%**

| Steel No. | C | Cr | Co | Mo | Al | Ti | Al+T i | O/ pp m | N/ pp m | S/ pp m | O+N+S / ppm | P | Ti/A l |
|---|---|---|---|---|---|---|---|---|---|---|---|---|---|
| Example 1 | 0.03 1 | 18.96 | 13.7 8 | 4.4 8 | 1.3 6 | 3.2 2 | 4.58 | 3 | 18 | 3 | 24 | 30 | 2.37 |
| Example 2 | 0.03 0 | 18.50 | 13.0 2 | 4.1 8 | 1.3 2 | 3.0 4 | 4.36 | 4 | 13 | 2 | 19 | 30 | 2.30 |
| Example 3 | 0.03 5 | 19.42 | 13.3 2 | 4.4 8 | 1.3 9 | 3.1 7 | 4.56 | 4 | 13 | 2 | 19 | 30 | 2.28 |
| Example 4 | 0.03 7 | 19.64 | 13.6 6 | 4.2 4 | 1.3 2 | 3.1 4 | 4.46 | 3 | 10 | 2 | 15 | 13 | 2.38 |
| Example 5 | 0.02 9 | 18.80. | 13.9 8 | 4.2 6 | 1.3 7 | 3.11 | 4.48 | 8 | 20 | 5 | 33 | 20 | 2.27 |
| Comparative Example 1 | 0.04 1 | 19.47 | 13.7 5 | 4.3 6 | 1.6 0 | 3.0 0 | 4.60 | 13 | 32 | 31 | 76 | 50 | 1.88 |
| Comparative Example 2 | 0.04 7 | 19.52 | 13.5 6 | 4.3 3 | 1.4 0 | 3.1 0 | 4.50 | 4 | 39 | 50 | 93 | 50 | 2.21 |
| Comparative Example 3 | 0.05 0 | 19.58 | 13.5 2 | 4.4 6 | 1.2 0 | 2.7 5 | 3.95 | 3 | 4 | 14 | 211 | 17 | 2.29 |
| Comparative Example 4 | 0.03 1 | 18.96 | 13.7 8 | 4.4 8 | 1.3 6 | 3.2 2 | 4.58 | 3 | 18 | 3 | 24 | 80 | 2.37 |
| Comparative Example 5 | 0.01 8 | 18.80. | 14.0 0 | 4.9 0 | 1.5 9 | 3.1 2 | 4.71 | 6 | 32 | 4 | 42 | 43 | 1.96 |

Metallurgical structures of the examples and comparative examples are shown in Table 2. Specifically, as shown in FIG. 2, grain sizes at different positions are tested. It can be seen that the product in the example of the present invention has uniform grains with a grain-size number of 6.5 or more, such as 7 to 8, and grains of different parts are uniform and consistent, with a grain-size number difference of 2 or less (for example, the grain-size number difference is 1).

**Table 2 Metallurgical structures**

| Steel No. | Grain-size number | | | | γ' phase content/% | M₂₃C₆ content/wt% | MC content/wt% |
|---|---|---|---|---|---|---|---|
| | Position 1 | Position 2 | Position 3 | Position 4 | | | |
| Example 1 | 7.0 | 7.5 | 8 | 7 | 25.91 | 0.61 | 0.14 |
| Example 2 | 7.5 | 7.5 | 8 | 7 | 24.55 | 0.59 | 0.14 |
| Example 3 | 7.0 | 7.5 | 7 | 8 | 25.86 | 0.68 | 0.17 |
| Example 4 | 7.5 | 8 | 7.5 | 7 | 25.16 | 0.72 | 0.18 |
| Example 5 | 7.0 | 7.5 | 8 | 7 | 25.38 | 0.57 | 0.13 |
| Comparative Example 1 | 4.5 | 6 | 5.5 | 3.5 | 28.10 | 0.80 | 0.20 |
| Comparative Example 2 | 4.5 | 6.5 | 6 | 3 | 27.70 | 0.92 | 0.23 |
| Comparative Example 3 | 4.0 | 6.5 | 6 | 3 | 23.20 | 0.98 | 0.24 |
| Comparative Example 4 | 3.5+8.0 | 6 | 6.5 | 3 | 25.91 | 0.61 | 0.14 |
| Comparative Example 5 | 8.0 | 7.5 | 8 | 6 | 27.34 | 0.35 | 0.08 |

Table 3 shows the mechanical properties of the examples and comparative examples of the present invention at room temperature. Table 4 shows the mechanical properties of the examples and comparative examples of the present invention at 535°C. Table 5 shows the durability of the examples and comparative examples of the present invention at 730°C/550 MPa. Table 6 shows the LCF performance of the examples and comparative examples of the present invention at 500°C.

**Table 3 Tensile mechanical properties at room temperature**

| No. | σ_{b}/MPa | σ_{0.2}/MPa | δ₅/% | ψ/% |
|---|---|---|---|---|
| Example 1 | 1411 | 1050 | 21 | 29 |
| Example 2 | 1396 | 1048 | 22.5 | 32 |
| Example 3 | 1331 | 1022 | 22 | 25 |
| Example 4 | 1363 | 1040 | 24 | 36 |
| Example 5 | 1406 | 1013 | 23.5 | 27 |
| Comparative Example 1 | 1227 | 883 | 15.0 | 20.4 |
| Comparative Example 2 | 1232 | 872 | 10.2 | 15.0 |
| Comparative Example 3 | 1266 | 866 | 24.6 | 22 |
| Comparative Example 4 | 1267 | 863 | 24.7 | 22 |
| Comparative Example 5 | 1435 | 1090 | 25.5 | 39 |

**Table 4 Tensile mechanical properties at 535°C**

| No. | σ_{b}/MPa | σ_{0.2}/MPa | δ₅/% | ψ% |
|---|---|---|---|---|
| Example 1 | 1310 | 945 | 20 | 28.5 |
| Example 2 | 1230 | 915 | 20 | 24 |
| Example 3 | 1210 | 885 | 21 | 26.5 |
| Example 4 | 1270 | 940 | 19 | 27.5 |
| Example 5 | 1320 | 945 | 21.5 | 26.5 |
| Comparative Example 1 | 1105 | 775 | 25.0 | 24.9 |
| Comparative Example 2 | 1009 | 672 | 8.0 | 11.0 |
| Comparative Example 3 | 1066 | 766 | 21.6 | 32 |
| Comparative Example 4 | 1067 | 763 | 23.7 | 25 |
| Comparative Example 5 | 1354 | 1002 | 13.5 | 23.0 |

**Table 5 Durability**

| No. | 730°C/550MPa | | 815°C/295MPa | |
|---|---|---|---|---|
| | τ/h | δ₅/% | τ/h | δ₅/% |
| Example 1 | 46.4 | 28 | 56.3 | 13 |
| Example 2 | 41.5 | 26 | 54.5 | 15 |
| Example 3 | 41.4 | 25 | 53.9 | 14 |
| Example 4 | 41.6 | 28 | 65.7 | 16 |
| Example 5 | 42.7 | 35 | 64.3 | 17 |
| Comparative Example 1 | 25.1 | 15 | - | - |
| Comparative Example 2 | 22.5 | 17 | - | - |
| Comparative Example 3 | 51.6 | 28 | - | - |
| Comparative Example 4 | 22.7 | 35 | - | - |
| Comparative Example 5 | 11.6 | 33 | - | - |

**Table 6 LCF performance: 500°C/strain control: 0% to 0.7%/0.33 Hz**

| No. | Number of cycles, Nf |
|---|---|
| Example 1 | 33884 |
| Example 2 | 41348 |
| Example 3 | 34438 |
| Example 4 | 36428 |
| Example 5 | 47323 |
| Comparative Example 1 | 24031 |
| Comparative Example 2 | 17438 |
| Comparative Example 3 | 15793 |
| Comparative Example 4 | 15209 |
| Comparative Example 5 | 28745 |

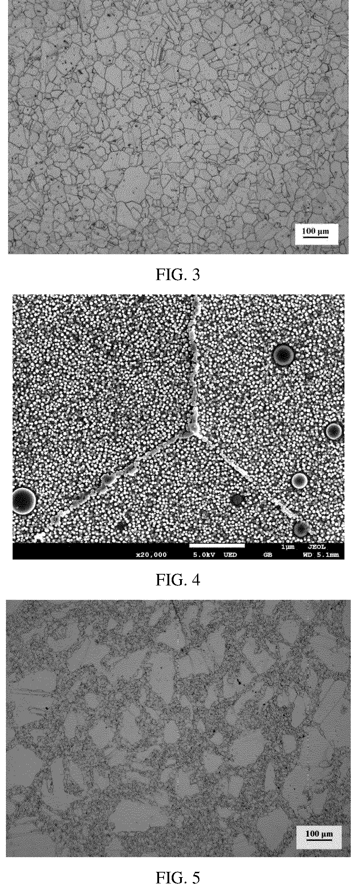

FIG. 3 is an image illustrating grains of Example 1 of the present invention. FIG. 4 is an image illustrating a microstructure of Example 1 of the present invention. FIG. 5 is an image illustrating grains of Comparative Example 4.

The disc-shaft integrated turbine disc of the present invention has an average grain-size number of 7 to 8, finer than number of 5, and with a grain-size number difference of less than 2 (for example, the grain-size number difference is 1). A Cv value of grain-size numbers is 2.33% to 4.33%, which is in a normal range and indicates a small discrete degree. The disc-shaft integrated turbine disc of the present invention has a small discrete degree in tensile strengths and yield strengths at room temperature and 535°C, with a Cv value of 2.63% to 4.75%. The disc-shaft integrated turbine disc has a Cv value of less than 15% in elongations at break and section shrinkage rates, which is in a normal range and indicates a small discrete degree.

In summary, in the present invention, contents of elements in an alloy for a disc-shaft integrated turbine disc are accurately controlled and Ti/Al and (Al+Ti) values are coordinatively controlled to ensure uniform grains of a microstructure of the disc-shaft integrated turbine disc, make a grain-size number reach 6.5 or more, and allow the optimal matching between a content and a size of γ' phases in the alloy. Contents of O, N, S, and P are accurately controlled to reduce a content of inclusions in the alloy and improve the purity, plasticity, and fatigue performance of the alloy, thereby ensuring the uniformity of grains, the precipitation and distribution of grain boundary phases, and the comprehensive properties of the alloy. The disc-shaft integrated turbine disc of the present invention has a small discrete degree in tensile strengths and yield strengths at room temperature and 535°C, with a Cv value of 2.63% to 4.75%. The disc-shaft integrated turbine disc has a Cv value of less than 15% in elongations at break and section shrinkage rates, which is in a normal range and indicates a small discrete degree. The properties of the disc-shaft integrated turbine disc fluctuate little.

## Claims

1. A disc-shaft integrated turbine disc,
**characterized in that** the disc-shaft integrated turbine disc comprises a disc portion (1) and a shaft portion (2) penetrating through the disc portion (1), wherein the disc portion (1) and the shaft portion (2) are integrally formed; and the disc-shaft integrated turbine disc comprises the following components in mass percentages: C: 0.026% to 0.04%, Cr: 18.5% to 20.0%, Co: 13.0% to 14.0%, Mo: 4.0% to 4.90%, Al: 1.3% to 1.45%, Ti: 2.80% to 3.25%, Ti/Al: 2.25 to 2.38, (Al + Ti): 4.35% to 4.58%, O: less than or equal to 20 ppm, N: less than or equal to 20 ppm, S: less than or equal to 10 ppm, P: less than or equal to 80 ppm, and nickel: the balance;
wherein a microstructure of the disc-shaft integrated turbine disc mainly includes equiaxed austenite grains, carbides evenly distributed, and γ' phases diffusely distributed; the carbides mainly include M₂₃C₆ and MC, where M₂₃C₆ is short rod-shaped and is discontinuously distributed at grain boundaries, and a content of M₂₃C₆ is 0.5% to 0.75% in mass fraction;
and MC is block-shaped and is discontinuously distributed in grains, and a content of MC is 0.1% to 0.2% in mass fraction;
and the γ' phases are spherical, are diffusely distributed in grains, and have a particle size of 60 nm to 200 nm; a content of the γ' phases is 24% to 26%, where a content of γ' phases with a particle size of 60 nm to 100 nm is 12% to 16%, and a content of γ' phases with a particle size of greater than 100 nm is 8% to 14%;
wherein low-cycle fatigue (LCF) performance of the disc-shaft integrated turbine disc is: 500°C/strain control: 0% to 0.7%/0.33 Hz, and more than 3 × 10⁴ cycles;
wherein the disc-shaft integrated turbine disc has a grain-size number of 6.5 or more and a grain-size number difference of 2 or less.

2. The disc-shaft integrated turbine disc according to claim 1, wherein the disc-shaft integrated turbine disc comprises the following components in mass percentages: C: 0.026% to 0.037%, Cr: 18.5% to 19.7%, Co: 13.0% to 13.98%, Mo: 4.10% to 4.70%, Al: 1.3% to 1.45%, Ti: 2.95% to 3.25%, Ti/Al: 2.26 to 2.38, (Al + Ti): 4.36% to 4.58%, O: less than or equal to 10 ppm, N: less than or equal to 20 ppm, S: less than or equal to 8 ppm, P: less than or equal to 40 ppm, and nickel: the balance.

3. A preparation method of the disc-shaft integrated turbine disc according to claim 1 or 2, **characterized in that** the preparation method comprises:
step 1: designing a closed mold, and selecting an appropriate bar billet according to a blanking weight;
step 2: applying a thermally-insulating coating to a side and end faces of the bar billet, and then wrapping a soft jacket around the bar billet;
step 3: upsetting the bar billet at 1,030°C to 1,060°C to obtain a cake billet;
step 4: removing the soft jacket from the cake billet, and cooling;
step 5: wrapping a jacket around the cake billet, and then subjecting the cake billet to closed-die forging at 1,030°C to 1,060°C to obtain a forging;
step 6: removing the jacket from the forging, and cooling;
step 7: subjecting the forging to a solid-solution treatment; and
step 8: stabilizing and aging the forging to obtain the disc-shaft integrated turbine disc;
wherein in the step 1, the bar billet is obtained through vacuum induction melting (VIM),
electroslag remelting (ESR), vacuum arc remelting (VAR), and homogenization;
wherein in the step 3, the upsetting adopts primary hot-pressing with a deformation amount of 50% to 60% and a depression rate of 5 mm/s to 10 mm/s;
wherein in the step 7, the solid-solution treatment is conducted as follows: heating to a temperature of 995°C to 1,050°C, holding the temperature for 3.5 h to 4.5 h, and oil-cooling.

4. The preparation method according to claim 3, wherein in the step 1, the VIM comprises:
S1.2.1: raw material loading: loading a carbon powder, a cobalt block, and a molybdenum strip into a vacuum induction furnace in batches, and after furnace materials are completely loaded into the vacuum induction furnace, vacuuming and energizing the vacuum induction furnace;
S1.2.2: melting and refining: baking at a low power to allow vacuuming, and allowing a gradient increase of a power to 1,000 KW to 1,500 KW; after the first group of raw materials are fully melted, adding a remaining nickel plate, a remaining carbon powder, and a remaining cobalt block; and after furnace materials are completely melted, electromagnetically stirring a resulting alloy liquid; and
S1.2.3: discharging and casting: reducing the power, and conducting heat preservation; adding an aluminum block and a titanium sponge in batches; after furnace materials are melted, introducing an Ar gas, and adding a nickel alloy; applying electromagnetic stirring, and adjusting the power to allow a casting temperature; and tapping a molten steel, furnace-cooling the molten steel for a specified period of time, and subjecting a cooled molten steel to a vacuum-breaking treatment obtain a vacuum induction ingot.

5. The preparation method according to claim 3, wherein in the step 1, the VAR comprises:
S1.4.1: arranging an electrode in a crystallizer, conducting a centering treatment, and completing electrode welding in a vacuum arc furnace;
S1.4.2: adjusting a vacuum degree to less than 1 Pa and a gas leakage rate to less than 0.3 Pa/min in the vacuum arc furnace, and energizing the vacuum arc furnace to allow smelting;
S1.4.3: introducing a helium gas for cooling during the smelting; and
S1.4.4: after an ingot is obtained, cooling the ingot in the vacuum arc furnace, and subjecting a cooled ingot to a vacuum-breaking treatment with a vacuum self-consumable arc to obtain a steel ingot.

6. The preparation method according to claim 5, wherein in the S1.4.3, the introducing a helium gas for cooling during the smelting is conducted as follows: according to a flow rate control, increasing a helium flow rate from 0 mL/min to 110 mL/min within the first 0.5 h, and decreasing the helium flow rate from 110 mL/min to 20 mL/min at a hot topping stage of 0.5 h.

## Patentansprüche

1. Eine Turbinenscheibe mit integrierter Scheibe und Welle, **dadurch gekennzeichnet, dass** die Turbinenscheibe mit integrierter Scheibe und Welle einen Scheibenabschnitt (1) und einen den Scheibenabschnitt (1) durchdringenden Wellenabschnitt (2) umfasst, wobei der Scheibenabschnitt (1) und der Wellenabschnitt (2) einstückig ausgebildet sind; und die Turbinenscheibe mit integrierter Scheibe und Welle die folgenden Komponenten in Massenprozenten umfasst: C: 0,026 % bis 0,04 %, Cr: 18,5 % bis 20,0 %, Co: 13,0 % bis 14,0 %, Mo: 4,0 % bis 4,90 %, Al: 1,3 % bis 1,45 %, Ti: 2,80 % bis 3,25 %, Ti/Al: 2,25 bis 2,38, (Al + Ti): 4,35 % bis 4,58 %, O: kleiner oder gleich 20 ppm, N: kleiner oder gleich 20 ppm, S: kleiner oder gleich 10 ppm, P: kleiner oder gleich 80 ppm und Nickel: der Rest;
eine Mikrostruktur der Turbinenscheibe mit integrierter Scheibe und Welle hauptsächlich aus gleichachsigen Austenitkörnern, gleichmäßig verteilten Carbiden und diffus verteilten γ'-Phasen besteht; und die Carbide hauptsächlich aus M₂₃C₆ und MC bestehen, wobei M₂₃C₆ kurz stabförmig ist und an den Korngrenzen diskontinuierlich verteilt ist und MC blockförmig ist und diskontinuierlich in den Körnern verteilt ist, die Korngröße von γ'-Phase 60-200 nm beträgt, und der Gehalt zwischen 24 % und 26 % liegt, wovon der Gehalt der γ'-Phase mit einer Korngröße von 60-100 nm 12-16 % beträgt, und der Gehalt der γ'-Phase mit einer Größe größer als 100 nm 8-14 % beträgt;
die Niederschwingungsermüdungsleistung (LCF) der Turbinenscheibe mit integrierter Scheibe und Welle:
500 °C / Dehnungssteuerung 0 %-0,7 % / 0,33 Hz, > 3 × 10⁴ Zyklen; Korngrößenzahl der Turbinenscheibe mit integrierter Scheibe und Welle von 6,5 oder mehr und eine Korngrößenzahldifferenz von 2 oder weniger aufweist.

2. Die Turbinenscheibe mit integrierter Scheibe und Welle gemäß Anspruch 1, wobei die Turbinenscheibe mit integrierter Scheibe und Welle die folgenden Komponenten in Massenprozenten umfasst: C: 0,026 % bis 0,037 %, Cr: 18,5 % bis 19,7 %, Co: 13,0 % bis 13,98 %, Mo: 4,10 % bis 4,70 %, Al: 1,3 % bis 1,45 %, Ti: 2,95 % bis 3,25 %, Ti/Al: 2,26 bis 2,38, (Al + Ti): 4,36 % bis 4,58 %, O: kleiner oder gleich 10 ppm, N: kleiner oder gleich 20 ppm, S: kleiner oder gleich 8 ppm, P: kleiner oder gleich 40 ppm und Nickel: der Rest.

3. Ein Herstellungsverfahren für die Turbinenscheibe mit integrierter Scheibe und Welle nach Anspruch 1 oder 2, **dadurch gekennzeichnet, dass** das Herstellungsverfahren umfasst:
Schritt 1: Entwerfen einer geschlossenen Form und Auswählen eines geeigneten Stangenrohlings entsprechend dem Stanzgewicht;
Schritt 2: Aufbringen einer wärmeisolierenden Beschichtung auf eine Seiten- und Endfläche des Stangenrohlings und anschließendes Umwickeln des Stangenrohlings mit einer weichen Ummantelung;
Schritt 3: Stauchen des Stangenrohlings bei 1.030 °C bis 1.060 °C, um einen Kuchenblock zu erhalten;
Schritt 4: Entfernen der weichen Hülle vom Kuchenblock und Abkühlen;
Schritt 5: Wickeln einer Hülle um den Kuchenblock und anschließendes Gesenkschmieden des Kuchenblocks bei 1.030 °C bis 1.060 °C, um ein Schmiedestück zu erhalten;
Schritt 6: Entfernen der Ummantelung vom Schmiedestück und Abkühlen;
Schritt 7: Unterziehen des Schmiedestücks einer Mischkristallbehandlung; und
Schritt 8: Stabilisieren und Altern des Schmiedestücks, um die Turbinenscheibe mit integrierter Scheibe und Welle zu erhalten;
wobei in Schritt 1 der Stangenrohling durch Vakuuminduktionsschmelzen (VIM), Elektroschlacke-Umschmelzen (ESR), Vakuumlichtbogen-Umschmelzen (VAR) und Homogenisieren erhalten wird;
wobei in Schritt 3 das Stauchen ein primäres Heißpressen mit einem Verformungsgrad von 50 % bis 60 % und einer Senkgeschwindigkeit von 5 mm/s bis 10 mm/s umfasst;
wobei in Schritt 7 die Mischkristallbehandlung wie folgt durchgeführt wird:
Erhitzen auf eine Temperatur von 995 °C bis 1.050 °C, Halten der Temperatur für 3,5 h bis 4,5 h und Ölkühlung.

4. Das Herstellungsverfahren gemäß Anspruch 3, wobei das VIM in Schritt 1 Folgendes umfasst:
S 1.2.1: Beladen mit Rohmaterialien: Nickelplatten, Kohlenstoffpulver, Kobaltblöcke und Molybdänstreifen werden chargenweise in einen Vakuuminduktionsofen geladen; nachdem die Ofenmaterialien vollständig in den Vakuuminduktionsofen geladen wurden, der Vakuuminduktionsofen abgesaugt und mit Strom versorgt wird;
S 1.2.2: Schmelzen und Raffinieren: Backen bei niedriger Leistung, um ein Vakuum zu ermöglichen, und Ermöglichen einer graduellen Leistungssteigerung auf 1.000 KW bis 1.500 KW; nachdem die erste Gruppe von Rohstoffen vollständig geschmolzen ist, Hinzufügen der restlichen Nickelplatten, der restlichen Kohlenstoffpulver und der restlichen Kobaltblöcke; und nachdem die Ofenmaterialien vollständig geschmolzen sind, elektromagnetisches Rühren einer resultierenden Legierungsflüssigkeit; und
S 1.2.3: Entladen und Gießen: Reduzieren der Leistung und Durchführen einer Wärmeerhaltung; Zugeben der Aluminiumblöcke und der Titanschwämme in Chargen; nachdem die Ofenmaterialien geschmolzen sind, Einleiten der Argongase und Zugeben der Nickellegierungen;
Anwenden eines elektromagnetischen Rührens und Anpassen der Leistung, um eine Gießtemperatur zu ermöglichen; und Abstechen einer Stahlschmelze, Abkühlen der Stahlschmelze im Ofen für einen festgelegten Zeitraum und Unterziehen der abgekühlten Stahlschmelze einer Vakuumbrechbehandlung, um einen Vakuuminduktionsbarren zu erhalten.

5. Das Herstellungsverfahren gemäß Anspruch 3, wobei in Schritt 1 der VAR Folgendes umfasst:
S 1.4.1: Anordnen einer Elektrode in einem Kristallisator, Durchführen einer Zentrierbehandlung und Abschließen des Elektrodenschweißens in einem Ofen;
S1.4.2: Einstellen eines Vakuumgrads auf weniger als 1 Pa und einer Gasleckrate auf weniger als 0,3 Pal/min und Einschalten des Ofens, um das Schmelzen zu ermöglichen;
S1.4.3: Einführen der Heliumgase zur Kühlung während des Schmelzens; und
S1.4.4: Nachdem ein Barren erhalten wurde, der Barren im Vakuumlichtbogenofen abgekühlt wird und der abgekühlte Barren einer Vakuumbrechbehandlung mit einem selbstverzehrenden Vakuumlichtbogen unterzogen wird, um einen Stahlbarren zu erhalten.

6. Das Herstellungsverfahren gemäß Anspruch 5, wobei in S1.4.3 das Einführen der Heliumgase zum Kühlen während des Schmelzens wie folgt durchgeführt wird: gemäß einer Durchflussratensteuerung, Erhöhen der Heliumdurchflussrate von 0 ml/min auf 110 ml/min innerhalb der ersten 0,5 Stunden und Verringern der Heliumdurchflussrate von 110 ml/min auf 20 ml/min in einer Hot-Topping-Phase von 0,5 Stunden.

## Revendications

1. Disque de turbine intégré à disque-arbre, **caractérisé en ce que** ledit disque de turbine intégré à disque-arbre comprend une partie de disque (1) et une partie d'arbre (2) pénétrant à travers ladite partie de disque(1), ladite partie de disque (1) et ladite partie d'arbre (2) étant intégralement moulées; les composants dudit disque de turbine intégré à disque-arbre, en termes de pourcentage massique, comprennent: C: 0,026% ~ 0,04%, Cr: 18,5% ~ 20,0%, Co: 13,0% ~ 14,0%, Mo: 4,0% ~ 4,90%, Al: 1,3% ~ 1,45%, Ti: 2,80% ~ 3,25%, Ti/Al: 2,25 ~ 2,38, (Al+Ti): 4,35% ~ 4,58%, O: ≤20ppm, N: ≤20ppm, S≤10ppm, P≤80ppm, nickel: reste;
la microstructure dudit disque de turbine intégré à disque-arbre comprend principalement des grains d'austénite équiaxes et des carbures uniformément répartis, ainsi qu'une phase γ' distribuée de manière diffuse; dans lequel les carbures comprennent principalement M₂₃C₆ et MC; M₂₃C₆ est en forme de tige courte et est distribué de manière discontinue aux joints de grains, avec une fraction massique de 0,5%~0,75%; MC est en forme d'un bloc et est distribué de manière discontinue dans les grains, avec une fraction massique de 0,1%~0,2%; la phase γ' est sphérique, distribuée de façon diffuse à l'intérieur du grain, la taille des particules de la phase γ' est de 60~200nm, la teneur est de 24%~26%, où une teneur de la phase γ' avec une taille de particule de 60~100nm est de 12%~16%, et une teneur de la phase γ' avec une taille de particule de plus de 100 nm est de 8%~14%;
la performance en fatigue à faible cycle (LCF) dudit disque de turbine intégré à disque-arbre: 500 °C/contrôle de contrainte 0%~0,7 %/0,33 Hz, > 3 × 10⁴ cycles;
la taille des grains dudit disque de turbine intégré à disque-arbre est plus de 6,5 degrés, la différence de taille des grains est moins de 2 degrés.

2. Disque de turbine intégré à disque-arbre selon la revendication 1, dans lequel, les composants dudit disque de turbine intégré à disque-arbre, en termes de pourcentage massique, comprennent: C: 0,026% ~ 0,037%, Cr: 18,5% ~ 19,7%, Co: 13,0% ~ 13,98%, Mo: 4,10% ~ 4,70%, Al: 1,3% ~ 1,45%, Ti: 2,95% ~ 3,25%, Ti/Al: 2,26 ~ 2,38, (Al+Ti): 4,36% ~ 4,58%, O: ≤10ppm, N: ≤20ppm, S≤8ppm, P≤40ppm, nickel: reste.

3. Procédé de préparation d'un disque de turbine intégré à disque-arbre selon la revendication 1 ou la revendication 2, **caractérisé en ce que** le procédé de préparation comprend:
étape 1: concevoir un moule fermé et sélectionner une billette de tige appropriée en fonction du poids de découpe;
étape 2: appliquer un revêtement d'isolation thermique sur les côtés et les extrémités de la billette de tige, puis appliquer un emballage souple;
étape 3: refouler la billette de tige à 1030°C~1060°C pour obtenir une billette de gâteau;
étape 4: retirer l'emballage de la billette de gâteau et refroidir;
étape 5: appliquer un emballage souple sur la billette de gâteau, forger dans le moule fermé à 1030°C~1060°C pour obtenir une pièce forgée;
étape 6: retirer l'emballage de la pièce forgée et refroidir;
étape 7: soumettre la pièce forgée à un traitement en solution solide;
étape 8: stabiliser et vieillir la pièce forgée pour obtenir un disque de turbine intégré à disque-arbre;
dans l'étape 1, la billette de tige est obtenue par fusion par induction sous vide (VIM), refusion sous laitier électroconducteur (ESR), refusion à l'arc sous vide (VAR) et traitement d'homogénéisation;
dans l'étape 3, le refoulement est réalisé par pressage à chaud primaire avec une déformation de 50%~60% et une vitesse de dépression de 5~10 mm/s;
dans l'étape 7, le traitement en solution solide est réalisé par: chauffer à une température de 995 °C~1050 °C, maintenir de la température pendant 3,5~4,5 h, puis refroidir à l'huile.

4. Procédé de préparation d'un disque de turbine intégré à disque-arbre selon la revendication 3, dans lequel, dans l'étape 1, le VIM comprend:
S1.2.1 chargement: charger par lots de la plaque de nickel, de la poudre de carbone, du bloc de cobalt et de la bande de molybdène dans le four; une fois que les matériaux sont complètement chargés dans le four, évacuer à vide et préparer l'électrification;
S1.2.2 fusion et affinage: maintenir une cuisson à faible puissance, évacuer l'air et utiliser une augmentation de puissance graduelle à 1000~1500KW, une fois que les matériaux dans le four sont complètement fondu, ajouter de la plaque de nickel restante, de la poudre de carbone restante et des blocs de chrome restants jusqu'à ce que les matériaux soient complètement fondu, puis agiter électromagnétiquement le liquide d'alliage;
S 1.2.3 déchargement et coulée: réduire la puissance et maintenir de la chaleur, ajouter par lots des blocs d'aluminium et de l'éponge de titane, une fois les matériaux fondue, remplir le four de gaz d'Ar, ajouter de l'alliage de nickel et appliquer une agitation électromagnétique, ajuster la puissance à la température de coulée pour la production d'acier, après que le four ait refroidi pendant un certain temps, appliquer une traitement de cassage du vide pour obtenir un lingot d'induction sous vide.

5. Procédé de préparation d'un disque de turbine intégré à disque-arbre selon la revendication 3, dans lequel, dans l'étape 1, le VAR comprend:
S1.4.1: disposer une électrode dans un cristallisoir, effectuer un traitement de centrage, et terminer le soudage de l'électrode dans le four;
S1.4.2: lorsque le degré de vide est inférieur à 1 Pa et que le taux de fuite de gaz est inférieur à 0,3 Pa/min, l'électricité est fournie pour la fusion;
S1.4.3: remplir un gaz d'hélium pour le refroidissement pendant la fusion;
S1.4.4: après l'obtention du lingot, refroidir le lingot dans un four à arc sous vide, soumettre le lingot refroidi à un traitement de cassage du vide avec un arc autoconsommable sous vide pour obtenir un lingot d'acier.

6. Procédé de préparation d'un disque de turbine intégré à disque-arbre selon la revendication 5, dans lequel, dans S1.4.3, du gaz d'hélium est rempli pour le refroidissement pendant la fusion comme suit: selon un contrôle de débit, augmenter le débit d'hélium de 0 mL/min à 110 mL/min dans les premières 0,5h, et diminuer le débit d'hélium de 110 mL/min à 20 mL/min à une étape de surmoulage à chaud dans 0,5 h.
